# EUROPEAN PATENT SPECIFICATION

(11) **EP 3 298 301 B1**
(45) Date of publication and mention of the grant of the patent: **05.06.2019**
(21) Application number: 16733679.1
(22) Date of filing: 17.05.2016
(51) Int. Cl.: F16G 13/16

(54) **STEEL ENERGY CHAIN LINK**
STAHLENERGIEKETTENGLIED
MAILLON DE CHAÎNE D'ÉNERGIE EN ACIER

(30) Priority: 19.05.2015 IT UB20150868
(43) Date of publication of application: 28.03.2018
(73) Proprietor: Findalto S.r.l., 20900 Monza (IT)
(72) Inventor: MAURI, Giovanni, 20900 Monza (IT)
(74) Representative: Riccardi, Sergio
(86) International application number: PCT/IB2016/000686
(87) International publication number: WO 2016/185271

(56) References cited:
- EP-A1- 0 001 656
- EP-A1- 2 463 546
- DE-A1- 19 707 966
- US-B1- 6 349 534

## Description

The present invention relates to the field of cable holding chains, more particularly steel energy chains. It is well known in this field that the steel chains may be used in a plurality of technical sectors, according to the operative mode, the size of the chain links and many other factors.

In any case the steel chains are generally very sturdy structures adapted to be used with heavy mechanical loads. These chains are generally structures with a not negligible weight, so they generally have great self-bearing features, should withstand sudden changes in temperature and be adapted to be used in difficult environments and even outdoors.

The persons skilled in this art know that these energy chains may be used also on oil rigs, drilling and machining platforms, overhead ducts, robotized systems of any kind; said chains are frequently located in very hard or diversified environments, according to the overall size of the chain, more particularly dictated by the size, shape and structure of the chain links.

The present invention may be applied with particular utility also in the field of offshore rigs. It is known that the main object of the steel energy chains is to convey and protect pipes, hoses and cables which are quite long, very heavy and decidedly expensive in this sector.

Enterprises in this technical field are mainly interested in steel chains combining characteristics of sturdiness and long life of at least 15 years, an optimal quality/price ratio also achieved by design optimization and standardization, the maximum possible sturdiness/weight ratio and in addition good self-bearing features and resistance to wear.

More particularly the present invention is a development and improvement of a previous invention of the same Applicant, namely document EP 2 463 546 A1 disclosing an innovative method of production for energy chain links. This document discloses a method of manufacturing elements of chain links from a metal sheet which is advantageous because the presence of only two through holes at the same distance from the sheet curvature center and other constructional measures cited hereinafter when needed, allow to achieve a method of manufacturing chain links in which two link elements are partially overlapping to increase sturdiness and self-bearing capacity of the chain, using the link elements made with the cited innovative method. Since these link elements are individual one piece parts increasing advantageously the load bearing capacity of the chain, Applicant conducted further study and development of said elements and achieved a particularly innovative version that will be illustrated hereinafter.

These additional improvements were achieved in the light of the sector of interest of the present invention, more particularly for steel energy chains and still in the most preferred field for those chains adapted to withstand heavy loads and to be installed for use in outdoor and/or extreme environments, with particular emphasis on chains for offshore rigs.

In addition, with reference to the cited innovative method, it has also to be noted that, in a particular advantageous way, said chain link unlike any other prior art chain link made by superposition of some parts, in a particular innovative way comprises only two through holes for attachment to the corresponding link following and preceding the illustrative link shown in the annexed drawings. Therefore, in a further innovative and advantageous way, said manufacturing method allows to produce chain links with a limited number of through holes, to the advantage of the resistance to wear of said chain link.

However, document EP 2 463 546 A1 closest to the present invention, does not allow to achieve high performances of fatigue strength of the supporting tooth of each individual link, adapted to be inserted into the corresponding female seat of the preceding link, since this element undergoes a considerable wear and results to be particularly delicate being a protruding portion.

Moreover the coupling technique between the two link faces, for instance by electric welding, is a very expensive process in contrast with the market demand turned to reliable and sturdy but not expensive products, especially in the field of use of these chain links.

Therefore the present invention intends to describe a steel energy chain comprising innovative chain links manufactured by the disclosed method; however in this case, although the method is similar, said chain links are made of steel and of big size, and were further improved, thus achieving a device having additional innovative and unexpected performances when compared with the previously disclosed method. More particularly further technical studies, developments and tests allowed Applicant to obtain a link device for a cable holding chain, achieving high performances under many aspects that are object of the present invention and will be described in detail hereinafter. The link obtained through said method is also innovative, but it was also implemented an improved link especially dedicated to the cited reference sector.

With brief reference to the previously cited prior art embodiments of chain links designed to be superposed to increase their load bearing power and resistance, it was already discussed that indeed the drilling operation of said links, such as the metal chain disclosed in document EP 2 005 025 B1 is totally inadequate to achieve effective resistance to wear and load bearing power to a steel chain of big size, which is the subject of the present invention.

The links disclosed in the above mentioned document consist of a single piece, like the conventional prior art chain links, but more particularly are provided with a number of openings and slots of big size, so that an expert in this field will at once realize that said holes considerably reduce the mechanical strength of the article. Moreover the points of support to fix the links are three, and in view of their configuration and stress, in addition to cover more than 40% of the useful surface of the relevant link portion, they have reduced possibility to work exactly at the same time, so that the stability and continuity of operation appears compromised. In addition, said links are manufactured by blanking and punching, which it is notoriously a very inaccurate machining operation, suitable for some working systems, but hardly succeeds to warrant the detailed precision that would be required to warrant the precision of making three points of support of such size to give the maximum possible support. It is also to be noted that the blanking and punching process is totally inadequate for making chain links of great thickness and consequently weight with the required precision.

These aspects make said links inadequate to be considered the prior art closest to the object of the present invention, in view of the starting poor mechanical strength which is immediately clear.

In the field of steel chains and more particularly for chains especially designed for complicate environments and for offshore rigs, those steel chains should be considered of interest as prior art, having greater load bearing capacity and mechanical strength for heavy loads, and chains of big size suitable for extreme and offshore environments.

Ore particularly it has to be noted that the present invention, which may be considered an improvement in a specific technical field relative to the previous invention of the same Applicant, is particularly implemented for chains with a high load bearing capacity, unlike the object of said previous invention.

These chains with high load bearing capacity, in a particularly known and performing prior art embodiment, may comprise double outer links alternate with a single link pitch, also called inner link. These links may be designed of any shape and thickness, to obtain chains of big size and high loading capacity and strength.

These chains, which will not be discussed in detail since they are the most known and used in said field, have good mechanical and durability characteristics, but it is also known that they have a decidedly considerable weight, affecting the transportation modes and costs and the assembling difficulties. The considerable weight obviously affects also the amount of forces required for their movement, and in the long run said weight, combined with the weight of cables, pipes and/or hoses, affects the chain life time. Each of the mentioned aspects involves considerable organization problem, as well known by the experts in this field, as well as long times for their transportation and assembling, high costs for the transport of the links and labor proportioned to the assembling and installation operations, and so forth.

This kind of chains, of which one example will be discussed hereinafter, comprises a pitch with double outer links alternate with a pitch with a single inner link, and in such an inner portion the resisting section is lower. In other words in this known chain, there is a double thickness of the outer links working together alternated with said single inner link. Thus it is already possible to make a first comparison with the advantages provided by a chain comprising two coupled mirror symmetrical link elements forming a single chain link, like the link described in the present invention. In this aspect in the version here defined simply as L-shaped chain according to the kind of coupling the elements, there is a pair of segments always engaged on the male side of the chain and four engaged segments on the female side of the chain. In this way one of the main objects of the previous invention is achieved, namely to provide for greater resisting sections and also greater torsional strength, in view of the two coupled segments forming the innovative link. It is also clear to a person skilled in this art, that a well reduced number of components is required to assemble the links of the L-shaped chain.

In addition, the prior art chains always comprise an odd number of links, consequently with a partially superposed link pitch. In calculating the length of a chain to be manufactured, based on the number of required elements, this is rounded off to the multiple of the double pitch for the prior art chains. The innovative L-shaped chains however do not require an odd number of links, they simply add as many as required for the final length, and this involves a lower number of required link elements. This aspect clearly gives a considerable economic saving for the final user, in addition to reducing the chain weight, still warranting an optimal load bearing capacity.

At last a further important element notoriously consists of the studs or crossbars. In prior art chains for each chain pitch studs of two different lengths are required, while for the innovative links the required studs are all of the same length, with a further considerable cost saving.

Moreover, in a decidedly relevant and advantageous way, the innovative chain link, as described also in the previous application from which originates the innovation to be described hereinafter, comprises a supporting tooth preferably of trapezoidal shape, so as to give a support surface parallel to a radial directrix starting from the pivoting center of the female side of the link for the mutual rotation of the parts. In view of this, the corresponding shaped portion for receiving said tooth, called also support peak, on the male side of the link, has such a shape to define an obtuse and not acute angle during the movement of the parts. In this way the mechanical support strength is increased.

With regard now to the objects of the present invention, Applicant verified through technical trials and production tests the effectiveness of the method and of the manufactured chain link, and also verified that said chain link having the technical characteristics described in the previous application is particularly adapted for the production of steel chains of small or medium size. However, for chains of big size to be used in extreme environments, like the offshore sector, further innovative developments herein described are required to achieve the adequate load bearing capacity required in the sector of the so-called heavy chains.

With regard to the manufacturing method and then the implemented device, the two portions of metal sheet which are juxtaposed to be united and forming the chain link, they were mutually fixed for instance by seaming, electric welding or like methods, this process gives optimal mechanical properties of resistance to stress only for steel chains of small and medium size, but when the average height and thickness of the link increase and also the load bearing and stress of the link are increasing, this type of structure cannot withstand the stress and there is the risk that the two portions come off or bend, thus damaging the chain. This is due to the fact that said two portions united by said methods, do not constitute from the structural point of view a single element with double resistance to stress given by the double thickness. It was also verified that under certain conditions, there are such transversal loads that said link for L-shaped chains so produced cannot stand at best.

Finally it was also verified that for very high loads, the two portions forming the chain link at the protruding element or tooth, hereinafter illustrated in many variations clearly explaining its name due to the shape of its preferred embodiments, may undergo excessive combined bending and compressive stress, and the two juxtaposed sheets may yield and get united, causing problems of self-bearing nature to the chain. In any case, as above noted, these aspects concern only chains of big size that indeed undergo exceptional loads and stresses.

Therefore an object of the present invention is to describe a link of a L-shaped chain, which is particularly suitable for the sector of steel chains of medium/big size with high load bearing and self-bearing power.

Another object of the invention is to provide for a chain link which is mechanically very sturdy, more particularly in its most critical parts such as the supporting tooth.

It is an object of the invention to provide for a chain link warranting a high load bearing capacity even when subject to heavy loads.

Still another object of the invention is to provide for a chain link withstanding high stress loads at every point of the link.

At last an object of the invention is to describe a chain link giving the maximum reliability as to possible failures, thus optimizing the life time of said chains, but with a reasonable prime cost.

To an expert of this field it appears immediately obvious that, although the shape of a chain link might seem similar between steel chains of small/medium size suitable for light/medium loads and chains with high load bearing capacity for extreme loads and medium/big size, indeed from the technical point of view, every parameter of stress to pressure, compression, torsion, cut, load and so forth are very different and need special technical characteristics, that should be adequate and well defined, as well as custom designed and implemented to warrant the best effectiveness in terms of performance and durability.

These and further objects are implemented by the link for L-shaped chains hereinafter described, comprising at least two metal sheets having plane surfaces being mutually parallel and connected converging in two further surfaces substantially parallel but not in mutual contact, said surfaces comprising also at least a recess and when coupled forming a chain link.

This recess is preferably designed in the form of a U or a substantially trapezoidal shape and the portion of metal sheet having the corresponding shape cut from said recess, is coupled with the same protrusion mirror located on the coupled metal sheet, so as to form a chain link. In a particular advantageous way, said two plane surfaces of said metal sheets to be mutually coupled, comprise through holes 3 acting as points 4 of mechanical.junction between the single link halves. Said points 4 of mechanical junction are adapted for instance to be mutually riveted or in any case advantageously coupled, in order to unite the two halves that in this way physically form a sole plane element, physically acting as a mechanical element of double thickness, thus resulting much stronger than the previously described L-shaped chain link.

In a further advantageous way, to strengthen said innovative chain links, in some embodiments on the two juxtaposed sheet sides disjoined from each other, ribs may be provided by drawing said link.

Still in another particularly preferred embodiment, said chain link may be designed with the above defined substantially trapezoidal tooth integral with the remnant link portion, made in the form of a seat recessed in the sheet sides forming said link; in this way the chain link is advantageously further strengthened, a need that might appear for instance in the offshore sector and others as well.

It has to be noted that said tooth may also have different shapes, provided that they are compatible for being coupled with the chain side adapted to be slideably coupled with said element, such as for example a circular or rounded shape and so forth.

These and other innovative advantages for the link having an L shape even innovative perse, implemented according to the present invention, will be described in more detail in the following description of the annexed drawings, showing some particularly preferred embodiments of the link of the present invention, in which:
Figure 1 shows prior art chain links connected to form a chain;
Figure 2 shows a link according to the present invention, in a first preferred embodiment;
Figure 3a shows one side forming the link of the present invention, in a second preferred embodiment;
Figure 3b is an exploded view of a link of the present invention in said second preferred embodiment;
Figure 4a is an exploded view of a further embodiment of the innovative link of the present invention; and
Figure 4b is an assembled representation of a pair of links according to the embodiment of figure 4a.

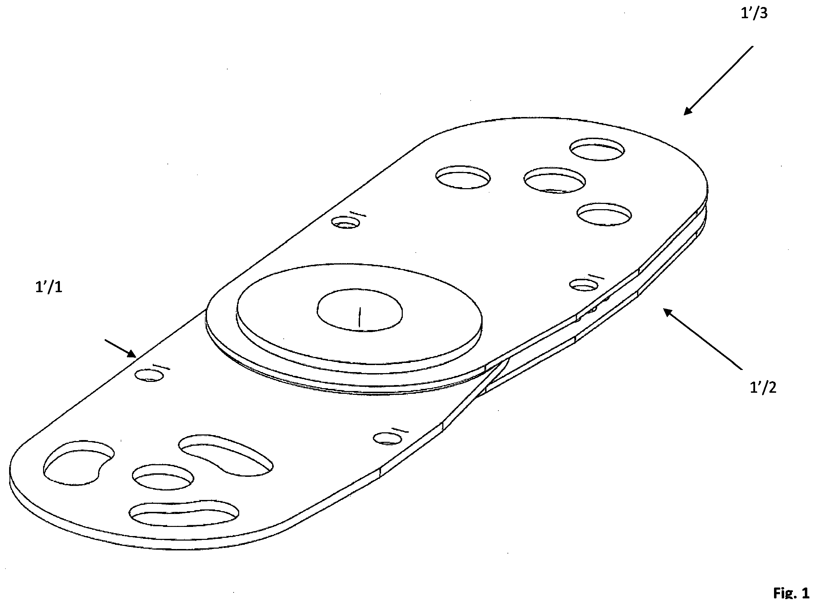

With reference now to figure 1, for clarity of comparison in this drawing a portion of a traditional chain is illustrated, comprising prior art chain links 1'/1, 1'/2, 1'/3 mutually connected. It is not intended to discuss at length this representation known to every man skilled in this art, but only to point out actually some aspects that were already indicated hereinbefore.

It appears immediately clear that to make a chain pitch, three chain links are required, which are mutually connected with a pitch with double outer links alternate to a pitch with one inner link. Said pitch with single inner link shows at such link a poorly resisting zone of the chain, and this occurs at every single link pitch, considerably affecting the strength and load bearing capacity of the chain. Moreover said two chain pitches comprise three links and this aggravates the chain weight as well as the total manufacturing cost, since additional components are required for assembling said links 1' together.

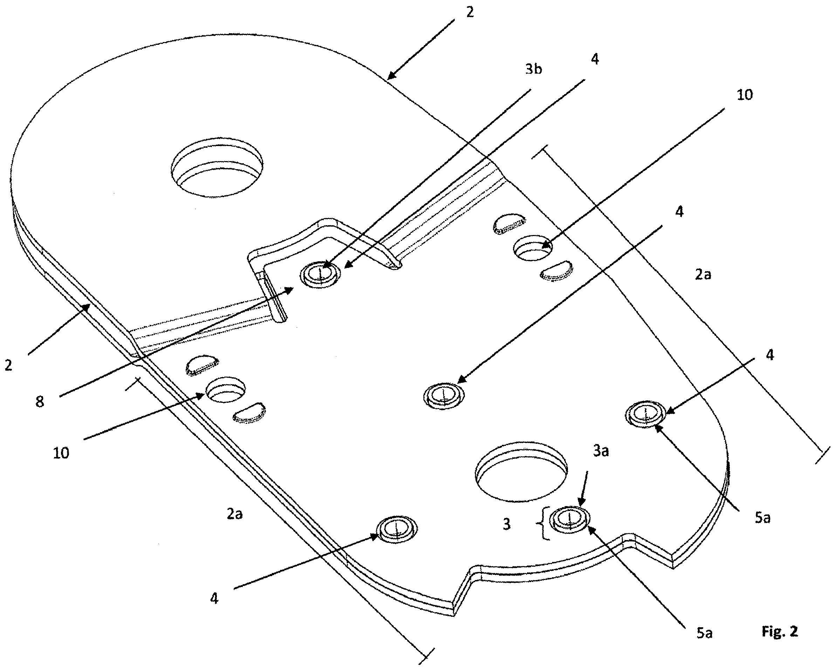

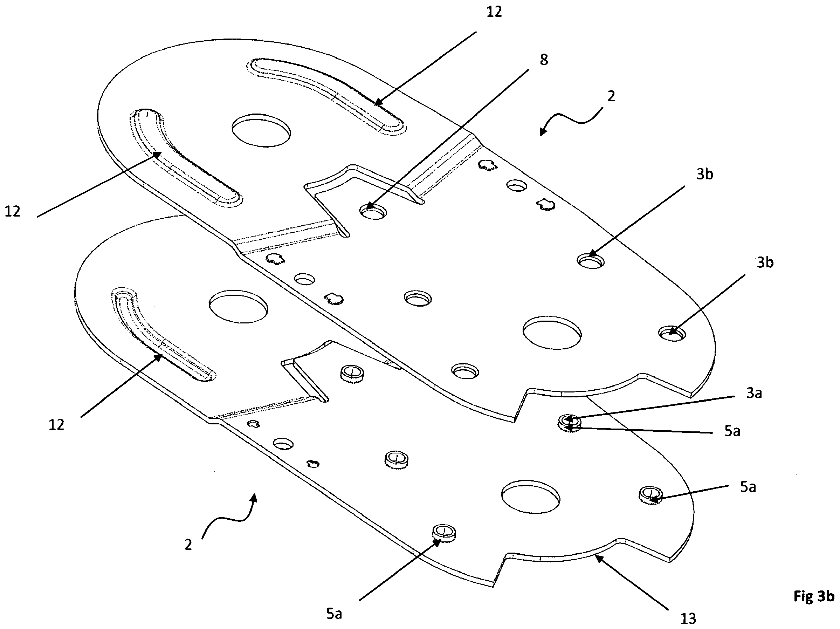

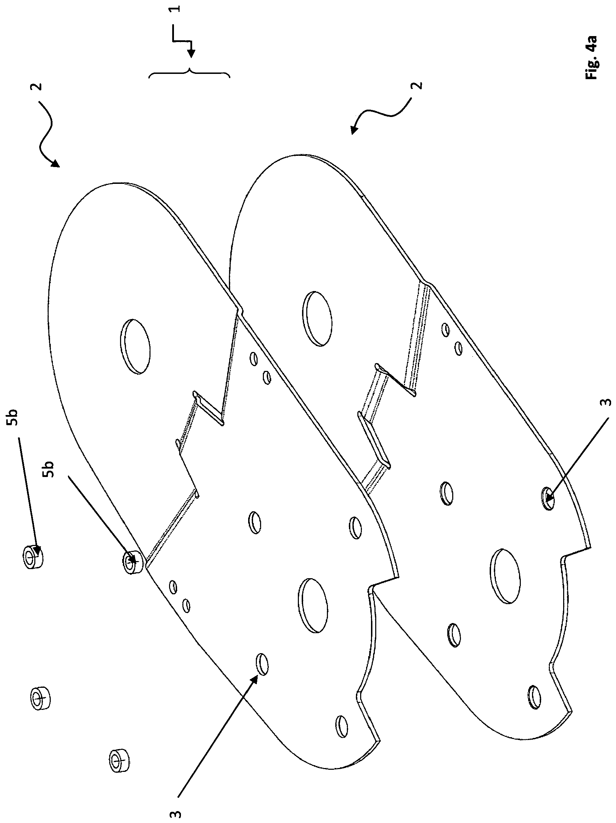

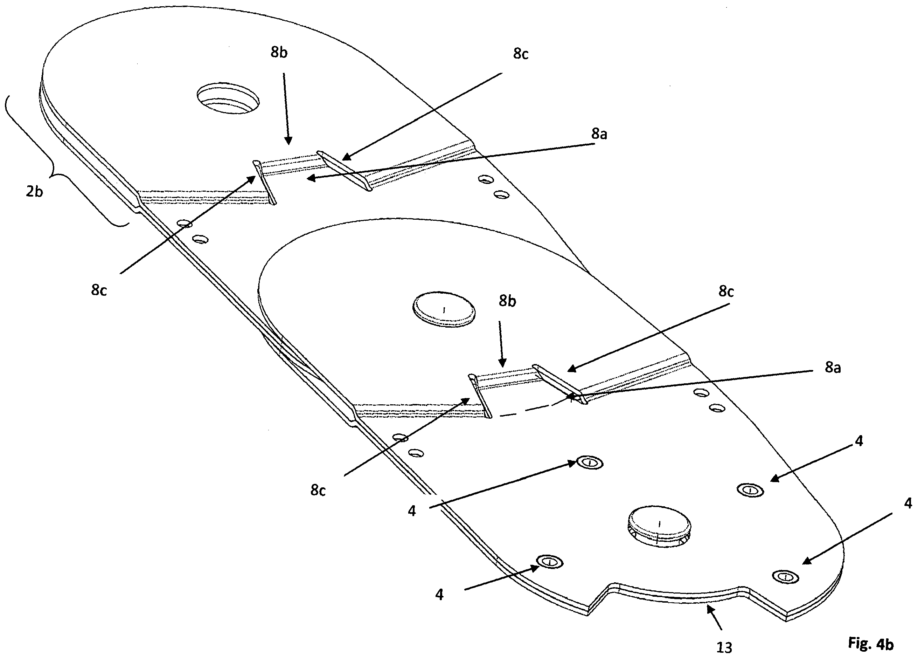

With reference now to figure 2, a preferred embodiment of the innovative chain link 1 according to the present invention is shown, comprising as above mentioned at least two sheet sides 2 mutually coupled. Said sides are coupled on the side portion called male side, comprising a first plane surface 2a made on said first sheet side 2, parallel and symmetrical to a second identical surface 2a made on said second sheet side 2. Said two surfaces 2a are advantageously firmly coupled together to form a single mechanical stress resistant thickness, unlike the previous coupling method described in the previous application of the same Applicant. This coupling of said two sides 2 on the surface 2a is carried out by making through holes 3 acting as mechanical joining points 4 between the two sides 2 of the two halves of link 1. Said points 4 of mechanical junction are for instance made by holes and fastening means 5; in a preferred embodiment for instance said means 5 are proper protuberances 5a of metal folded at one side on a first surface 2a around the perimeter of each hole 3a (thus made on one of the two sides 2) to engage corresponding holes 3b (seen in the following detail of figure 3b) properly countersunk and made on a second surface 2a, said protuberances 5a being directly obtained from the metal material such as sheet forming the sides 2 of link 1. Alternatively said points 4 of mechanical junction may be made by making properly countersunk holes 3, passing through both halves2, in which fastening means 5 are inserted, made with weld material, for example in the form of cylindrical tubes 5b of metal or like materials (seen in the embodiment of figure 4a). In the here described embodiment, said supporting tooth 8 has a substantially trapezoidal form and it is provided that said tooth 8, being a link part subject to considerable wear, is additionally reinforced through coupling means 8b, 4, 4, 5a, 5b adapted to firmly fasten mutually the two halves of the supporting teeth 8 of surfaces 2b. More particularly the coupling means 4, 3, 5a, 5b comprise a point 4 of mechanical junction, made by a hole 3 passing through the two sides 2a of link 1, rigidly coupled together by fastening means 5a, 5b (to be described hereinafter) to form a single plane element mechanically acting as a single piece. On the contrary the coupling means 8b, in a further embodiment shown in figures 4a and 4b, consists in the fact that the peak point 8b of each tooth 8 is joined to the surface 2b of side 2 of the link. The through holes 10 are the holes for receiving the connection studs between the two chain links.

It has to be noted that, in a particularly advantageous way, said points 4 of mechanical junction being of reduced diameter and moreover reinforced as above indicated, do not constitute areas of structural weakness and in fact give additional compactedness and rigidity to the link, unlike holes of big size compromising the structure of the chain links.

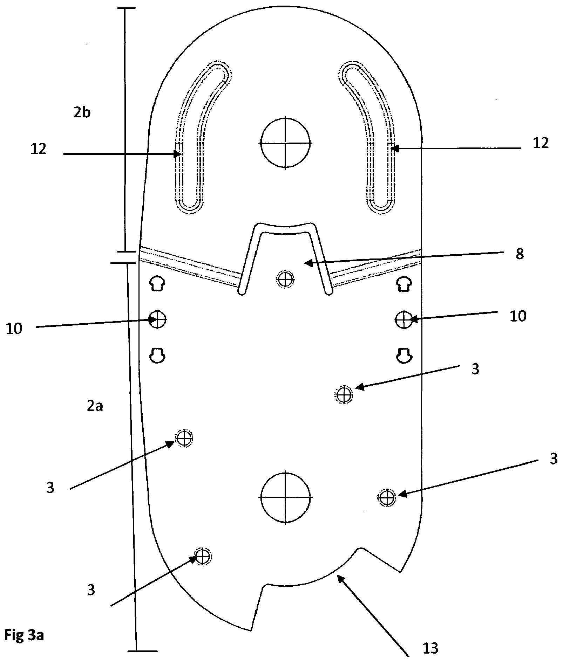

In figures 3a and 3b another preferred embodiment of the innovative chain link according to the present invention is shown, in the plan view of figure 3a and in the section plane of figure 3b, with a lateral perspective view of both sides 2 of link 1. As mentioned before, in some versions of cable holding chains, like for instance the versions of heavy chains with link height 145 mm and above, but that may also be made on smaller chains, from series 145 mm and below, ribs 12 are further made for instance from the same link 1 or drawn on the female surface 2b of sides 2 of link 1. These ribs 12 may advantageously have any form suitable for the intended object, namely to strengthen the surfaces 2b subject to possible transversal loads. Said ribs may advantageously have a form adapted to follow the development of the profile of the link side and are preferably drawn, as it is clear for this purpose, to protrude on the external sides of the link 1. Said drawings are preferably made on both sides of the link, but may also be made on alternate sides according to the operative needs. In figure 3b one can see the two sides of the supporting tooth 8 which, unlike the ribs 12, is cut in order to protrude and be constrained to the corresponding side on the inner face of said sheet sides 2.

Still in said figure one can see that points 4 of mechanical junction formed, in the here illustrated preferred embodiment, by through holes 3a made on one side 2 of link 1, and protuberances 5a made in the sheet of the second side 2 of link 1, for instance folded in a cylindrical shape, thus forming a hole 3b to be inserted into said hole 3a.

Finally in figures 4a and 4b a further preferred embodiment of the innovative chain link 1 of the present invention is illustrated: first of all it has to be noted that in this case said points 4 of mechanical junction are implemented by inserting into through holes 3, present on both sides 2 of link 1, tubes 5b of a cylindrical shape made of suitable metal material. It has to be noted that said points 4 of mechanical junction have preferably a round shape, but they might even be designed with a semicircular, oval and like shape, besides being constrained to each other by means such as proper screws or other articles for this purpose. Moreover said points 4 of mechanical junction may be disposed in any number on any part of the surface 2a of the side 2 of the chain link 1.

More particularly, in the present embodiment, the supporting tooth 8 is not made by blanking or bending operations like in the previous embodiments, where it is joined with its rear part to the surface 2a of the link side 2. From the mechanical point of view, the behavior of said tooth may be comparable to a cantilever. In this case one may see that from the plane side said tooth is mechanically strong, while from the transversal side (in other words sideways) the tooth results to be a rather thin element that may undergo excessive combined bending and compressive stress. It was verified that this is a very rare event, that may occur for energy chains with extreme load bearing and weight conditions. Should in any case this happen, if subject to very high loads, it would be possible that the supporting teeth 8 of sheets 2 are bent, thus damaging the self-bearing power of the chain. This effect never occurs for steel chains of small/medium size, but transferring this application for instance in the offshore sector, it was ingeniously found a way to solve this problem with the here illustrated embodiment. In this particularly innovative embodiment the supporting tooth 8 is made united with both surfaces 2a and 2b in at least two zones of said tooth, thus reinforcing the most stressed point portion 8b of said tooth 8. Said point portion 8b is also in contact with the C-shaped chain female side 13 and in this case the sides of said tooth 8 may be cut, or said supporting tooth 8 may be made in the form of a shaped seat (thus not requiring any sheet cutting step) of the desired form on said sheet side2, on said surfaces 2a and 2b, without cutting the lateral sides 8c of said supporting tooth 8. Moreover as above said, the tooth 8 may also have any other shape if suitable for its purpose, thus not having four distinct sides, but possibly only connection portions or a plurality of sides, clearly without altering the above described advantageous effects.

Therefore the mechanical junction of surfaces 2a, 2b and tooth 8 may take place through protuberances 5a to engage corresponding holes 3b directly made on surfaces 2a, 2b and tooth 8, or by means of cylindrical tubes 5b to be inserted in proper holes 3 directly made on surfaces 2a, 2b and tooth 8, or event by a combination of the above mentioned technical solutions, in any case followed by a riveting operation thus becoming a single piece. Alternatively or additionally the tooth 8 may be strengthened by uniting it with the other half tooth 8, since the point portion 8b of each tooth 8 is joined to the surface 2b of side 2 of each link.

The foregoing are only some possible embodiments of the innovative link for steel energy chain described in the present invention, but it is to be noted that any variation concerning materials, alloys of materials adapted for this object, variations in the number or shape of holes and seats, their dimensions or diameters, as well as variations of shape of fastening members and of the supporting tooth, provided that their technical operative function, sealing or fixing elements, may be modified or adapted for the object of the present invention or the required working conditions, as well as embodiments of said links, as to load bearing capacity, weight, size may be of any kind, since only some illustrative embodiments were described in the foregoing, and number of fastening members, holes and links or operative modes may be varied or even omitted in some embodiments, or made as integral pieces, still falling however in the scope of protection as defined by the appended claims.

## Claims

1. A chain link (1) for steel energy chain, comprising at least two sides (2) preferably consisting of mirror shaped metal sheets, comprising flat surfaces (2a) parallel and connected to each other, respectively converging into surfaces (2b) parallel but disjoined from each other, said surfaces (2b) comprising at least one supporting tooth (8), **characterized by** coupling means (8b, 4, 3, 3a, 5, 5a, 5b) to integrally fix together the supporting teeth (8) of the two surfaces (2b) for strengthening the resulting coupled supporting tooth and wherein said surfaces (2a) are mechanically coupled together by means of a plurality of mechanical connection points (4) made by holes (3, 3a, 3b) passing through the two surfaces (2a) of the link (1), rigidly coupled together by means of fastening means (5, 5a, 5b) to form a plane element acting mechanically as a one single piece.

2. The chain link (1) of claim 1, wherein said coupling means consists of the point portion (8b) of each supporting tooth (8) joined to the surface (2b) of the link side (2).

3. The chain link (1) of claim 1, wherein said coupling means (4, 3, 3a, 5a, 5b) comprise at least one mechanical junction point (4) made by a hole (3) passing through the two sides (2a) of link (1) rigidly coupled to each other by fastening means (5, 5a, 5b) forming a plane element acting mechanically as a one single piece.

4. The chain link (1)of claim 1, wherein said fastening means are protuberances (5a) of metal folded at one side on a first surface (2a) on the periphery of each hole (3a) to engage corresponding holes (3b) of a second surface (2a) of the link.

5. The chain link (1) of claim 1, wherein said fastening means are cylindrical metal tubes (5b) adapted to secure together said two surfaces (2a) being fixed in through holes (3) made on each of said two surfaces (2a).

6. The chain link (1) according to the preceding claims, wherein said surfaces (2b) of said sides (2), being parallel and disjoined from each other, comprise ribs (12) to strengthen the surfaces (2b) when undergoing transversal loads.

7. The chain link (1) according to the preceding claims, wherein said supporting tooth (8) is made by blanking or bending from said surfaces (2a) and is joined at least in its rear portion (8a) to the surface (2a) of the link side (2).

8. The chain link (1) according to the preceding claims, wherein said supporting tooth (8) is made, without requiring cuts, as a shaped seat in said surfaces (2a, 2b) of said side (2) of the link (1).

## Patentansprüche

1. Stahlenergiekettenglied (1) mit mindestens zwei vorzugsweise aus Spiegelmetallfolien bestehenden Seiten (2), die aneinander parallele und verbundene Planflächen (2a) aufweisen, wobei diese Planflächen (2a) in zwei parallele und geschiedene Flächen (2b) zusammenlaufen und diese Flächen (2b) jeweils mindestens einen Stützzahn (8) besitzen, **gekennzeichnet durch** Kupplungsmittel (8b,4,3,3a,5,5a,5b) für die gegenseitige Befestigung der Stützzähne (8) der beiden Flächen (2b), um den resultierenden verbundenen Stützzahn zu verstärken, wobei die besagten Flächen (2a) durch eine Mehrheit Verbindungsstellen (4) aneinander angekuppelt werden, und die Verbindungsstellen (4) mittels Durchgangsbohrungen (3,3a,3b) in den beiden Flächen (2a) des Kettenglieds (1) ausgebildet werden, wobei diese Flächen (2a) durch Befestigungsmittel (5,5a,5b) starr angekuppelt werden, um ein als Einzelteil mechanisch wirkendes Element zu bilden.

2. Energiekettenglied (1) nach Anspruch 1, worin das besagte Kupplungsmittel (8b) aus der mit der Fläche (2b) der Seite (2) des Kettenglieds verbundenen Spitze (8b) besteht.

3. Energiekettenglied (1) nach Anspruch 1, worin die besagten Kupplungsmittel (4,3,3a,5a,5b) mindestens eine Verbindungsstelle (4) enthalten, und die Verbindungsstelle (4) mittels einer Durchgangsbohrung (3) in den beiden Flächen (2a) des Kettenglieds (1) ausgebildet wird, wobei diese Flächen (2a) durch Befestigungsmittel (5,5a,5b) starr angekuppelt werden, um ein als Einzelteil mechanisch wirkendes Element zu bilden.

4. Energiekettenglied (1) nach Anspruch 1, worin die besagten Kupplungsmittel aus Metallbuckeln (5a) bestehen, wobei diese Buckel an einer ersten Fläche (2a) auf dem Umfang jeder Bohrung (3a) gebogen werden, um in entsprechende Bohrungen (3b) einer zweiten Fläche (2a) des Kettenglieds einzustecken.

5. Energiekettenglied (1) nach Anspruch 1, worin die besagten Kuppulungsmittel aus zylinderförmigen Metallröhrchen (5b) bestehen, um die zwei besagten Flächen (2a) aneinander zu befestigen, indem die Röhrchen in auf den beiden Flächen (2a) ausgebildeten Durchgangsbohrungen (3) befestigt werden.

6. Energiekettenglied (1) nach den vorhergehenden Ansprüchen, worin die besagten parallelen und geschiedenen Flächen (2b) der Seiten (2) Verstärkungsrippen (12) aufweisen, wenn die Flächen (2b) einer Querbelastung unterzogen werden.

7. Energiekettenglied (1) nach den vorhergehenden Ansprüchen, worin der Stützzahn (8) aus den besagten Flächen (2a) durch Schneiden bzw. Biegen gewonnen wird und mindestens an seiner Rückseite (8a) mit der Fläche (2a) der Kettenseite (2) verbunden wird.

8. Energiekettenglied (1) nach den vorhergehenden Ansprüchen, worin der Stützzahn (8) als geformter Sitz auf den Flächen (2a,2b) der Kettenseite (2) ohne Schneiden ausgebildet wird.

## Revendications

1. Maillon (1) de chaîne d'énergie en acier, comprenant au moins deux côtés (2) préférablement formés par des feuilles métalliques spéculaires avec des surfaces planes (2a) parallèles et connectées entre elles, convergeant en deux surfaces (2b) parallèles et disjointes entre elles, les dites surfaces (2b) comprenant au moins une dent d'appui (8), **caractérisé en ce qu'**il comprend des moyens d'accouplement (8b,4,3,3a,5,5a,5b) pour la fixation solidaire entre elles des dents d'appui (8) des deux surfaces (2b9 pour renforcer la dent d'appui accouplée y résultante, dont les dites surfaces (2a) sont accouplées mécaniquement entre elles par une pluralité des points (4) de jonction mécanique formés par trous (3,3a,3b) passants à travers les deux surfaces (2a) du maillon (1) accouplées rigidement entre elles par des moyens de fixation (5,5a,5b), pour former un élément plan agissant mécaniquement comme une pièce unique.

2. Maillon (1) de chaîne d'énergie selon la revendication 1, dont le dit moyen d'accouplement (8b) est formé par la pointe (8b) de chaque dent (8) jointe à la surface (2b) du côté (2) du maillon.

3. Maillon (1) de chaîne d'énergie selon la revendication 1, dont les dits moyens d'accouplement (4,3,3a,5a,5b) comprennent au moins un point (4) de jonction mécanique formé par un trou (3) passant à travers les deux surfaces (2a) du maillon (1) accouplées rigidement entre elles par des moyens de fixation (5,5a,5b), pour former un élément plan agissant mécaniquement comme une pièce unique.

4. Maillon (1) de chaîne d'énergie selon la revendication 1, dont les dits moyens de fixation sont des bossages métalliques (5a) repliés d'un côté sur une première surface (2a) dans le périmètre de chaque trou (3a) pour s'engager dans des trous correspondants (3b) d'une deuxième surface (2a) du maillon (1).

5. Maillon (1) de chaîne d'énergie selon la revendication 1, dont les dits moyens de fixation sont des tubes (5b) cylindriques métalliques aptes à fixer entre elles les dites deux surfaces (2a), les dits tubes étant fixés dans des trous de passage (3) formés dans chaque des deux surfaces (2a).

6. Maillon (1) de chaîne d'énergie selon les revendications précédentes, dont les dites surfaces (2b) des côtés (2), parallèles et disjointes entre elles, comprennent des nervures (12) pour renforcer les surfaces (2b) lorsqu'elles sont soumises aux charges transversales.

7. Maillon (1) de chaîne d'énergie selon les revendications précédentes, dont la dite dent d'appui (8) est formée par découpage ou pliage des dites surfaces (2a) et jointe au moins dans sa partie postérieure avec la surface (2a) du côté (2) du maillon.

8. Maillon (1) de chaîne d'énergie selon les revendications précédentes, dont la dite dent d'appui (8) est formée, sans besoin de découpage, comme logement façonné dans les dites surfaces (2a, 2b) du dit côté (2) du maillon (1) de chaîne.
